# EUROPEAN PATENT SPECIFICATION

(11) **EP 1 286 453 B1**
(45) Date of publication and mention of the grant of the patent: **27.04.2005**
(21) Application number: 02017919.8
(22) Date of filing: 09.08.2002
(51) Int. Cl.: H02K 21/16, G11B 19/20

(54) **Disk apparatus capable of automatically adjusting balance at the time of disk rotation**
Plattengerät mit der Fähigkeit, das Gleichgewicht automatisch während der Rotation der Platte einzustellen
Appareil à disque capable de régler automatiquement l'équilibrage pendant la rotation du disque

(30) Priority: 10.08.2001 JP 2001243276
(43) Date of publication of application: 26.02.2003
(73) Proprietor: ALPS ELECTRIC CO., LTD., Tokyo 145-8501 (JP)
(72) Inventor: Asano, Isao, c/oAlps Electric Co., Ltd., Tokyo 145-8501 (JP)
(74) Representative: Klunker . Schmitt-Nilson . Hirsch

(56) References cited:
- EP-A- 0 509 635
- EP-A- 0 553 664
- GB-A- 2 229 852
- US-A- 5 124 971
- US-A- 5 422 776
- US-A- 5 621 588
- PATENT ABSTRACTS OF JAPAN vol. 016, no. 430 (P-1417), 9 September 1992 (1992-09-09) & JP 04 147471 A (MITSUBISHI ELECTRIC CORP), 20 May 1992 (1992-05-20)
- PATENT ABSTRACTS OF JAPAN vol. 2000, no. 14, 5 March 2001 (2001-03-05) & JP 2000 333407 A (TADA SEIICHI;AKATANI MASAMI), 30 November 2000 (2000-11-30)

## Description

### BACKGROUND OF THE INVENTION

### 1. Field of the Invention

The present invention relates to a disk apparatus in accordance with the preamble of claim 1.

A disc apparatus of this type is known from EP-A- 509 635.

### 2. Description of the Related Art

A disk apparatus for carrying out reading and writing of a CD (Compact Disk), a DVD (Digital Versatile Disk) or the like is mounted in a personal computer or the like. This kind of disk apparatus is provided with a rotation driving part for rotating a loaded disk at high speed.

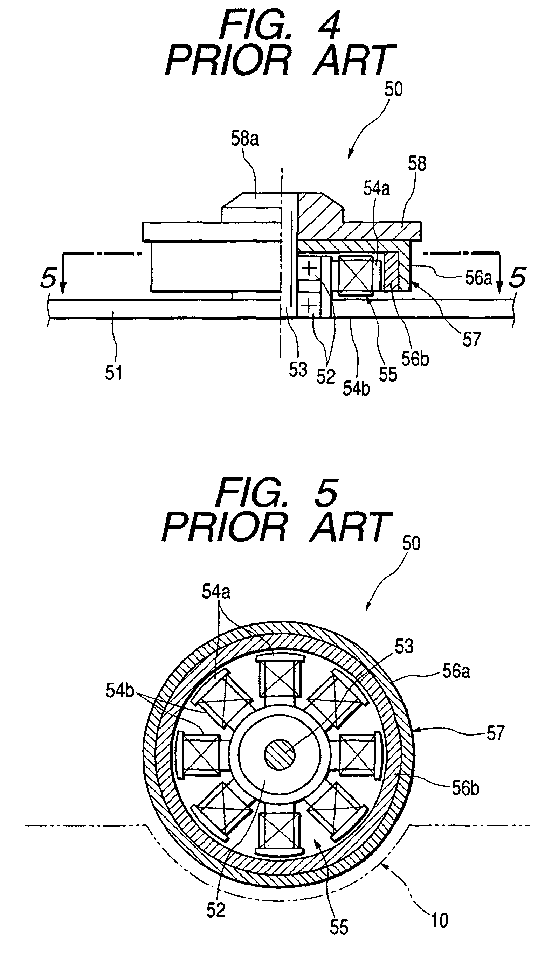

Fig. 4 and Fig. 5 are a semi-sectional view showing a rotation driving part mounted in a conventional disk apparatus (Jap. Unexamined Patent Publication No 11-113 213) and a sectional view taken along line 5-5 of Fig. 4. This rotation driving part 50 is mounted in a disk apparatus of a notebook personal computer, and has a size of so-called half inch height. In the rotation driving part 50, a bearing 52 is provided on a base (fixing part) 51, and a rotating shaft 53 is rotatably supported by the bearing 52. A stator coil 55 in which coils 54b are wound around plural cores 54a is provided at an outer periphery of the bearing 52. At an outer periphery of the stator coil 55, a rotor magnet 57 in which a magnet 56b is provided on an inner peripheral surface of a rotor 56a is fixed to the base 51 through the bearing 52. A turn table 58 is provided on an upper part of the rotor magnet 57. A chucking member 58a for detachably supporting a disk is provided on the turn table 58.

However, in the conventional rotation driving part 50, when an inferior disk having an irregular thickness or a disk on which a label is partially pasted is rotated at high speed, there is a problem that oscillation due to the unbalance of the disk occurs, and this oscillation is transmitted to an optical head and a track error occurs.

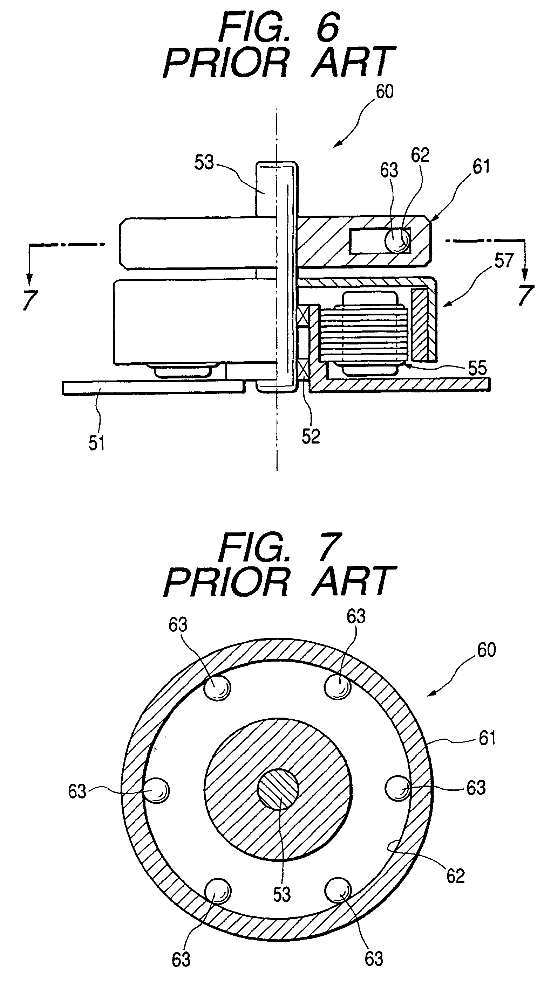

Then, some disk apparatus thicker than the half inch height adopts measures to provide balance adjustment means in the rotation driving part 50. Fig. 6 and Fig. 7 are a semi-sectional view showing a rotation driving part mounted in a thick disk apparatus, and a sectional view along line 7-7 of Fig. 6. This rotation driving part 60 is provided with a rotation driving mechanism (designated by the same symbol and its explanation is omitted) similar to the rotation driving part 50, and a rotator 61 is supported at an upper part thereof by a rotating shaft 53. A space 62 is annularly formed in the inside of the rotator 61, and plural spherical bodies 63 are movably received in the space 62. The rotator 61 is rotated, so that the unbalance at the time when an inferior disk is loaded is corrected.

Besides, as shown in Fig. 5, in the rotation driving part 50 mounted in this kind of disk apparatus, when an optical head 10 seeks to the innermost periphery of the disk, it moves to the outermost possible peripheral position of the rotation driving part 50. This is a dimension which can not be changed according to the standard of a disk such as a CD or a DVD. By this, the dimension of the outer diameter of the rotation driving part 50 can not be increased.

Thus, in the disk apparatus having enough thickness, although the balance adjustment means is provided at the upper side of the rotation driving part 50 as described above, since the dimension of height of the rotation driving part becomes large, it can not be mounted in a notebook computer or the like.

On the other hand, in a thin disk apparatus mounted in a notebook computer or the like, in the case where the balance adjustment means is provided, since it is difficult to secure a space for the disposition of the stator coil, the balance adjustment means can not be provided.

### SUMMARY OF THE INVENTION

The object of the invention is to provide a disk apparatus which can be used as a thin disk apparatus mounted in a notebook computer or the like and in which even if a disk is rotated at higher speed than a conventional one, oscillation does not occur.

According the present invention, a disk apparatus comprises the features of claim 1.

Preferred embodiments are defined by claims 2 and 3. When the head is moved to an innermost peripheral side of the disk, it approaches the rotor magnet, and the stator coil is partially disposed within a range of a predetermined angle in the outer periphery of the rotor magnet and in a region where it does not strike the head moved to the innermost peripheral side.

For example, the balance adjustment means is provided in a space formed between an outer periphery of the bearing and an inner periphery of the rotor magnet.

In the above invention, since the space where the balance adjustment means is provided can be secured between the outside of the bearing and the rotor magnet, it can be applied to a thin disk apparatus mounted in a notebook computer or the like. Further, an inferior disk or the like which disorders a rotation balance can be rotated at high speed while keeping its balance. By this, recording and reproduction control of the head at the time of high speed rotation can be certainly carried out.

### BRIEF DESCRIPTION OF THE DRAWINGS

Fig. 1 is a plan view of a part of an inner structure of a disk apparatus of the invention when viewed from a back side.
Fig. 2 is a longitudinal sectional view showing a rotation driving part.
Fig. 3 is a sectional view taken along line 3-3 of Fig. 2.
Fig. 4 is a semi-sectional view showing a rotation driving part mounted in a conventional disk apparatus.
Fig. 5 is a sectional view taken along line 5-5 of Fig. 4.
Fig. 6 is a semi-sectional view showing a rotation driving part mounted in another conventional disk apparatus.
Fig. 7 is a sectional view taken along line 7-7 of Fig. 6.

### DETAILED DESCRIPTION OF THE PREFERRED EMBODIMENTS

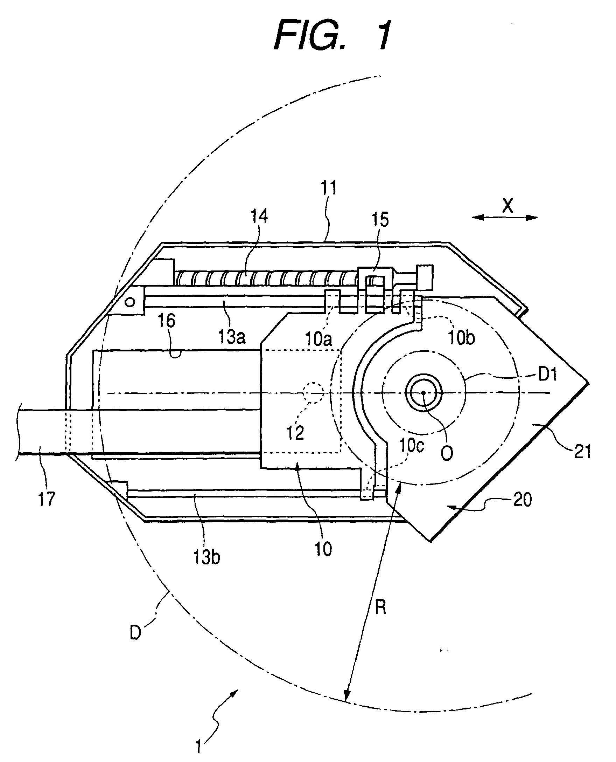

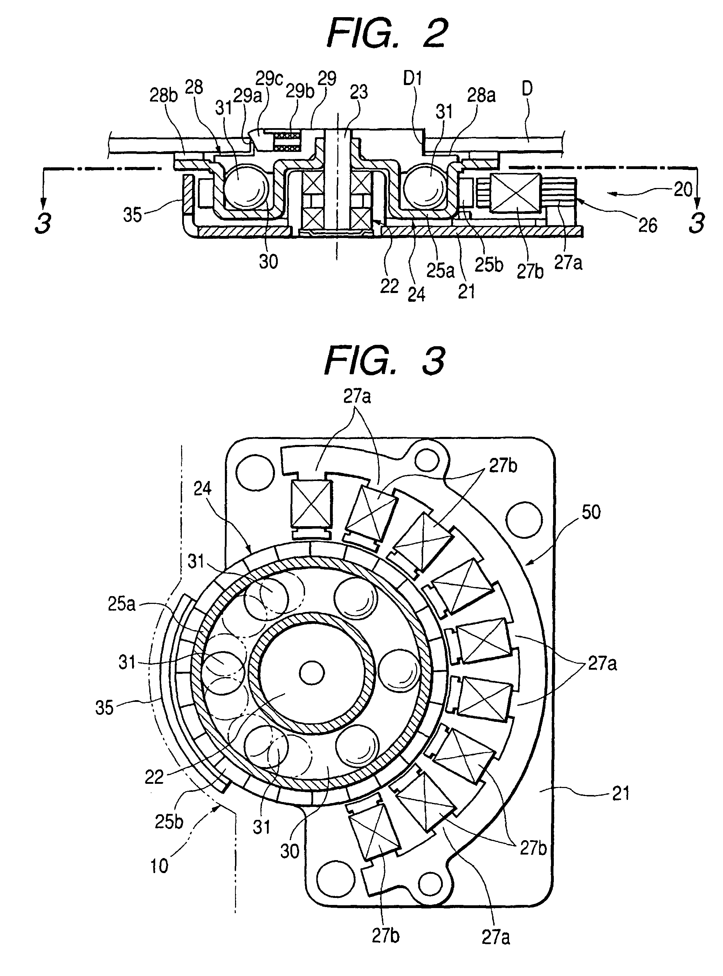

Fig. 1 is a plan view of a part of an inner structure of a disk apparatus of the invention when viewed from a back side, Fig. 2 is a longitudinal sectional view showing a rotation driving part, and Fig. 3 is a sectional view taken along line 3-3 of Fig. 2. In an embodiment described below, a description will be given of a thin disk apparatus, as an example, which is mounted in a notebook computer and in which a disk such as a CD or a DVD can be used.

A disk apparatus 1 shown in Fig. 1 includes an optical head 10 having an objective lens 12, and this optical head 10 is provided on a metal support substrate 11. Two guide members 13a and 13b are provided on the support substrate 11, and a rectangular opening 16 extending in an X direction is formed between the guide members 13a and 13b. Bearing holes 10a and 10b as guide references are formed in the optical head 10, and the guide member 13a is inserted through the bearing holes 10a and 10b. A U-shaped groove 10c is formed in the other side of the optical head 10, and the guide member 13b is inserted through this U-shaped groove 10c with a margin in the horizontal direction. The optical head 10 is guided by the guide members 13a and 13b in the X direction, so that the objective lens 12 is guided in the opening 16 in the X direction.

At a side of the guide member 13a as a reference side of head feed, a screw shaft 14 is disposed parallel on the support substrate 11, the power of a not-shown DC motor is reduced by a reduction gear group and is transmitted to the screw shaft 14, and the screw shaft 14 is rotated and driven. The optical head 10 is provided with a female screw-like locking member 15, and this locking member 15 is engaged with a screw groove of the screw shaft 14.

When the screw shaft 14 is rotated, this rotating force is exerted on the locking member 15 from the screw groove as a feeding force in the X direction, and the optical head 10 is moved in the X direction with the one guide member 13a as a reference. Besides, a band-like flexible substrate 17 is connected to the optical head 10, and can be freely bent in accordance with a slide operation of the optical head 10 so that it does not hinder the operation of the optical head 10.

Signals to correct the objective lens 12 in a tracking direction and a focusing direction are sent through the flexible substrate 17. Besides, laser light from a not-shown light source is irradiated on a disk surface through the objective lens 12, and reflected light from the disk is detected by a not-shown light receiving part.

A rotation driving part 20 is provided adjacently to the optical head 10 on the support substrate 11. The objective lens 12 provided in the optical head 10 is designed to move on a straight line connecting a rotation center O of the rotation driving part 20 and the objective lens 12 and indicated by a two-dot chain line of Fig. 1.

As shown in Fig. 2, in the rotation driving part 20, a bearing 22 is provided on a fixing part 21 formed of a metal plate, and a rotating shaft 23 is rotatably supported by the bearing 22. This bearing 22 may be a bearing a curved surface of which comes in contact with the periphery of the rotating shaft 23 to support it, or may be a bearing with plural spheres provided around the rotating shaft 23, the spheres supporting it.

A ring-shaped rotor magnet 24 rotated together with the rotating shaft 23 is provided to this rotating shaft 23. The rotor magnet 24 is constituted by an assembled body of a rotor 25a covering the bearing 22 from its upper part to its side part, and a ring-shaped magnet 25b fixed to the whole outer peripheral surface. In the rotor magnet 24, a concave-shaped and ring-shaped space 30 is formed between the bearing 22 and the magnet 25b.

On the fixing part 21, a stator coil 26 is provided to face the outer periphery of the magnet 25b of the rotor magnet 24. In the stator coil 26, stator cores 27a formed of magnetic metal material are respectively extended in the radius direction of a disk D to be integrally formed, and a coil 27b is wound around the periphery of each of the stator cores 27a.

A magnetic balancer 35 integrally formed with the fixing part 21 is provided at the opposite side to the stator cores 27a so that the static attracting force of the stator cores 27a and the magnet 25b are almost balanced in the whole periphery.

In this embodiment, as shown in Fig. 3, the stator coil 26 is provided around the rotor magnet 24 and in a region where it does not strike the optical head 10 when the optical head 10 is moved to the innermost peripheral side of the disk D. That is, the stator coil 26 is almost semicircularly and partially provided at the periphery of the rotor magnet 24.

In the disk such as a CD or a DVD, since the ring-shaped region denoted by symbol R of Fig. 1 is a region necessary to move the objective lens 12 of the optical head 10, if the stator coil 26 is provided around the whole periphery of the rotor magnet 24 of the rotation driving part 20, the dimension of the outside diameter of the rotation driving part 20 becomes excessively large and it becomes impossible to cause the optical head 10 to seek to the innermost periphery of the region R. However, in this embodiment, the optical head 10 can be moved in the whole of the region R by partially disposing the stator coil 26 of the rotation driving part 20 as described above.

As stated above, the rotor magnet 24 is disposed in the inside, and the stator coil 26 is disposed at the outer periphery of the rotor magnet 24, so that it becomes possible to provide the space 30 between the outer periphery of the bearing 22 and the rotor magnet 24. In this embodiment, as balance adjustment means, for example, plural steel spherical bodies 31 can be received in the space 30, and the respective spherical bodies 31 can freely move in the space 30. Incidentally, as the balance adjustment means, it is not necessary to restrict the number of the spherical bodies 31 to six, and the number may be more than that or less than that. Besides, in the space 30, the steel spherical bodies 31 may be replaced by spherical bodies of another material or something filled with liquid or the like.

As shown in Fig. 2, a turn table 28 is supported by the rotating shaft 23 to be disposed over the rotor magnet 24. The turn table 28 is provided with a support surface 28a capable of supporting a disk surface at its outer peripheral side, and a chucking member 29 for detachably supporting the disk D at its center side. Incidentally, in this embodiment, a slip resistance member 28b made of rubber is provided to have a ring shape at an outer peripheral edge part of the rotor 25a and at a position opposed to the disk D, and when the turn table 28 is rotated, the disk D does not slide but rotates together.

The chucking member 29 has a convex shape and is shaped into a disk in which its height dimension is slightly longer than the thickness of the disk D and its radius dimension is the same as the diameter of an opening D1 of the disk.

Insertion holes 29a each extending from a side toward a rotation center direction are formed every equal angle at plural places of the chucking member 29, and coil springs 29b are provided in the insertion holes 29a. A small projection 29c is supported at the tip of the coil spring 29b to be capable of moving to/from the side of the chucking member 29. By this, in the case where the disk D is mounted, the disk D is slightly pushed in a state where an edge part of the opening D1 is positioned at the outer peripheral part of the chucking member 29, so that the small projection 29c is pressed into the insertion hole 29a and is retreated, and when the disk D gets over the small projection 29c, the small projection 29c is projected from the insertion hole 29a by repelling force of the coil spring 29b and the disk D is fixed on the turn table 28.

Next, the operation of the rotation driving part 20 of the disk apparatus of this embodiment will be described.

When the disk D is mounted on the turn table 28 and is sent into the computer body, the disk D, together with the rotating shaft 23, the turn table 28 and the rotor magnet 24, is rotated, and information contained in the recording surface of the disk is read by the optical head 10.

In the disk apparatus in which the rotation driving part 20 is mounted, when the disk D is rotated, since the respective spherical bodies 31 are automatically moved in a direction to make the center of gravity of the whole coincident with the rotating shaft 23 by automatic aligning action, the rotation balance can be kept, and the occurrence of vibration can be prevented.

Incidentally, as the rotation driving part 20 shown in Fig. 3, for example, a three-phase brushless motor can be used. As the structure of the brushless motor, the magnet 25b is alternately magnetized to have the N pole and the S pole at a constant pitch in the circumferential direction, the stator cores 27a and the coils 27b of a U phase, a V phase, and a W phase are arranged in turn, and driving currents with phases different from each other by 120° are applied to the respective coils 27b of the U phase, the V phase and the W phase, so that the rotor magnet 24 is rotated in the clockwise direction or the counterclockwise direction on the paper plane of Fig. 3.

In this embodiment, although the description has been given of the case where the rotation driving part 20 is mounted in the thin disk apparatus, it is not limited to this, but may be mounted in a thick disk apparatus mounted in a desktop computer.

The invention described above can be used as a thin disk apparatus mounted in a notebook-sized or space-saving computer, and further, even if a disk is rotated at higher speed than a conventional one, the occurrence of vibration can be prevented, and a track error by that can be prevented.

Besides, even if it is used as a disk apparatus of a writable or rewritable CD or DVD and the disk is rotated at higher speed than a conventional one, stable recording becomes possible.

## Claims

1. A disk apparatus comprising a rotation driving part (20) for rotating a disk (D), and a head (10) moved in a radius direction of the disk (D), wherein
the rotation driving part (20) includes a bearing (22) provided at a fixing part (21), a rotating shaft (23) rotatably supported by the bearing (22), a table (28) provided to the rotating shaft (23) and supporting the disk (D), a ring-shaped rotor magnet (24), rotated together with the rotating shaft (23), and a stator coil (26) provided at a fixing side and facing an outer periphery of the rotor magnet (24), **characterized in that**
a balance adjustment means (31) rotated together with the rotating shaft (23) is provided inside the rotor magnet (24).

2. A disk apparatus as set forth in claim 1, wherein when the head (10) is moved to an innermost peripheral side of the disk (D) the head (10) approaches the rotor magnet (24), and the stator coil (26) is partially disposed within a range of a predetermined angle in the outer periphery of the rotor magnet (24) and in a region where the stator coil (26) does not strike the head (10) moved to the innermost peripheral side.

3. A disk apparatus as set forth in claim 1 or 2, wherein the balance adjustment means (31) is provided in a space formed between an outer periphery of the bearing (22) and an inner periphery of the rotor magnet (24).

## Patentansprüche

1. Scheibenvorrichtung mit einem Rotationsantriebsteil (20) zum Drehen einer Scheibe (D) und mit einem Kopf (10), der in Radialrichtung der Scheibe (D) beweglich ist, wobei das Rotationsantriebsteil (20) ein Lager (22), das an einem Fixierteil (21) vorgesehen ist, eine von dem Lager (22) drehbar gelagerte Drehwelle (23), einen auf der Drehwelle (23) vorgesehenen und die Scheibe (D) abstützenden Tisch (28), einen ringförmigen Rotormagneten (24), der sich zusammen mit der Drehwelle (23) dreht, sowie eine Statorwicklung (26) aufweist, die an einer Fixierseite vorgesehen ist und einem Außenumfang des Rotormagneten (24) gegenüberliegt,
**dadurch gekennzeichnet, dass** eine sich zusammen mit der Drehwelle (23) drehende Gleichgewichtseinstelleinrichtung (31) im Inneren des Rotormagneten (24) vorgesehen ist.

2. Scheibenvorrichtung nach Anspruch 1,
wobei bei Bewegung des Kopfes (10) zu einer innersten Umfangsseite der Scheibe (D) der Kopf (10) sich dem Rotormagneten (24) nähert und wobei die Statorwicklung (26) in einem vorbestimmten Winkelbereich an dem Außenumfang des Rotormagneten (24) in einem Bereich partiell vorgesehen ist, in dem die Statorwicklung (26) nicht gegen den zu der innersten Umfangsseite bewegten Kopf (10) stößt.

3. Scheibenvorrichtung nach Anspruch 1 oder 2,
wobei die Gleichgewichtseinstelleinrichtung (31) in einem Raum vorgesehen ist, der zwischen einem Außenumfangsbereich des Lagers (22) und einem Innenumfangsbereich des Rotormagneten (24) gebildet ist.

## Revendications

1. Appareil à disque comprenant une partie entraînement en rotation (20) pour faire tourner un disque (D), et une tête (10) déplacée dans une direction radiale du disque (D),
dans lequel la partie entraînement en rotation (20) comporte un roulement (22) placé sur une partie de fixation (21), un axe rotatif (23) supporté à rotation par le roulement (22), un plateau (28) placé sur l'axe rotatif (23) et supportant le disque (D), un aimant de rotor de forme annulaire (24), entraîné en rotation en même temps que l'axe rotatif (23), et une bobine de stator (26) prévue sur un côté de fixation et faisant face à une périphérie extérieure de l'aimant de rotor (24), **caractérisé en ce que**
un moyen de réglage d'équilibre (31) entraîné en rotation en même temps que l'axe rotatif (23) est prévu à l'intérieur de l'aimant de rotor (24).

2. Appareil à disque selon la revendication 1, dans lequel, lorsque la tête (10) est déplacée jusqu'à un côté périphérique intérieur extrême du disque (D), la tête (10) s'approche de l'aimant de rotor (24), et la bobine de stator (26) est partiellement disposée dans une plage d'un angle prédéterminé dans la périphérie extérieure de l'aimant de rotor (24), et dans une région où la bobine de stator (26) ne heurte pas la tête (10) déplacée jusqu'au côté périphérique intérieur extrême.

3. Appareil à disque selon la revendication 1 ou 2, dans lequel le moyen de réglage d'équilibre (31) est placé dans un espace formé entre la périphérie extérieure du roulement (22) et une périphérie intérieure de l'aimant de rotor (24).
